# EUROPEAN PATENT SPECIFICATION

(11) **EP 4 159 493 B1**
(45) Date of publication and mention of the grant of the patent: **08.05.2024**
(21) Application number: 22182442.8
(22) Date of filing: 30.06.2022
(51) Int. Cl.: B60G 7/00, B62D 7/18, B60G 11/16, B60G 9/02, B60B 27/00, B60B 35/00

(54) **VEHICLE COMPRISING A VEHICLE SUSPENSION STRUCTURE**
FAHRZEUG MIT EINER FAHRZEUGAUFHÄNGUNGSSTRUKTUR
VÉHICULE AVEC UNE STRUCTURE DE SUSPENSION DE VÉHICULE

(30) Priority: 29.09.2021 JP 2021158936
(43) Date of publication of application: 05.04.2023
(73) Proprietor: Suzuki Motor Corporation, Hamamatsu-shi, Shizuoka 432-8611 (JP)
(72) Inventor: YUASA, Koji, HAMAMATSU-SHI, 432-8611 (JP)
(74) Representative: Plasseraud IP

(56) References cited:
- EP-A1- 2 896 520
- JP-A- 2000 025 440
- JP-A- 2013 049 353
- JP-A- 2013 071 496
- US-A1- 2015 258 872

## Description

### [Technical Field]

The present invention relates to a vehicle comprising a vehicle suspension structure.

### [Background Art]

A de Dion rear suspension, as an example of a suspension of an axle suspension type, is located in the rear part of a vehicle. Such a rear suspension has, for example, an axle beam and carriers provided at both ends of the axle beam and to which hubs are attached, as disclosed in Patent Document 1, for example. The hubs are rotatably supported via hub bearings provided in the carriers.

In addition, the hub carriers have spring installation parts to which suspension springs of the rear suspension are attached. Therefore, the hub carriers require a predetermined strength against a load in the vehicle height direction. In this example, the inner surface of each hub carrier is formed with a detachable opening that allows the hub bearing to be attached and detached. Furthermore, the hub carrier is provided with an upper overhanging part and a lower overhanging part provided above and below the attachment/detachment opening, and the upper overhanging part and the lower overhanging part are connected by a connection part extending between both overhanging parts and in the vehicle height direction.

With this configuration, it is intended to lessen reduction in strength of the hub carriers in the vehicle height direction due to the attachment/detachment openings that are largely formed. Furthermore, in the rear suspension, even in the case in which a load in the height direction is applied to the hub carriers due to bumping of the vehicle or the like, it is intended to prevent the hub carriers from being damaged. Other examples of suspension can be found, for example, in Patent Document 2 and Patent Document 3. Patent document 2 discloses the preamble of claim 1.

### [Citation List]

### [Patent Literature]

[Patent Literature 1] JP 2013-071496 A
[Patent Literature 2] JP 2013-049353 A
[Patent Literature 3] JP 2000-025440 A

### [Summary of Invention]

### [Problems to be Solved by the Invention]

The hub carrier in the above example maintains a constant strength against a load acting in the vehicle height direction. As described above, not only the outer peripheral members of the hub carriers but also the upper overhanging parts and the lower overhanging parts thereof are provided, and these are connected to form a reinforcing structure. Therefore, the structure of the above example causes increase in weight of the hub carriers.

In addition, the weight increase of the hub carriers causes increase in weight of the lower parts of the suspension springs, which may affect the vehicle dynamics. Furthermore, since the members are added to the hub carriers, the layout of the hub carriers becomes limited, so that flexibility of designing may be reduced. Therefore, there is room for improvement in the structure of the above example in light of reducing a stress concentration with respect to a load in the vehicle height direction input from the suspension springs to the hub carriers, and effectively dispersing a stress to the surrounding members.

The present invention has been made in order to solve the above problems, and an object thereof is to provide a vehicle comprising a vehicle suspension structure capable of reducing a stress concentration with respect to a load in the vehicle height direction input from suspension springs to hub carriers and a reaction force from a trailing arm, and capable of effectively dispersing a stress to surrounding members.

### [Means for Solving the Problems]

To achieve the above object, a vehicle comprising a vehicle suspension structure according to the present invention includes: hub carriers through which a drive shaft extending in the vehicle width direction is disposed, hubs for wheels being fixed to the hub carriers; and a connecting member that connects the hub carriers on both sides in the vehicle width direction, in the vehicle suspension structure, outer parts in the vehicle width direction of the connecting member are provided with connecting parts that are connected to the hub carriers, an intermediate part in the vehicle width direction of the connecting member is offset vehicle-rearward from the drive shaft, and extends in the vehicle width direction, outer portions in the vehicle width direction of the intermediate part are provided with bent parts that are bent vehicle-frontward and connected to the connecting parts, the hub carriers each have a cylindrical part extending in the vehicle width direction, and a through-hole through which the drive shaft is inserted is provided at an outer end in the vehicle width direction of the cylindrical part, and an upper portion of the cylindrical part is provided with a spring installation part on which a suspension spring is installed.

### [Advantageous Effects of Invention]

According to the present invention, it is possible to reduce a stress concentration with respect to a load in the vehicle height direction input from the suspension springs to the hub carriers and a reaction force from the trailing arm, and to effectively distribute the stress to the surrounding members.

### [Brief Description of Drawings]

[Figure 1] Figure 1 is a perspective view showing one embodiment of a vehicle suspension structure according to the present invention.
[Figure 2] Figure 2 is a plan view of a rear suspension of Figure 1, as viewed from above the vehicle.
[Figure 3] Figure 3 is a front view of Figure 1.
[Figure 4] Figure 4 is an enlarged perspective view showing a hub carrier and others on the right side of Figure 1 in an enlarged manner.
[Figure 5] Figure 5 is a perspective view of the hub carrier of Figure 4, as viewed from the inner side in the vehicle width direction.
[Figure 6] Figure 6 is an enlarged front view showing the hub carrier on the left side of Figure 3 in an enlarged manner.
[Figure 7] Figure 7 is a rear view of the hub carrier and others of Figure 6, as viewed from the vehicle rear side.
[Figure 8] Figure 8 is a side view of the hub carrier of Figure 6, as viewed from the inner side in the vehicle width direction.
[Figure 9] Figure 9 is an enlarged perspective view of a state in which a drive shaft, a suspension spring, and a lateral rod are fixed to the hub carrier and a connecting member in Figure 1, as viewed from the vehicle inner side.

### [Mode for Carrying Out the Invention]

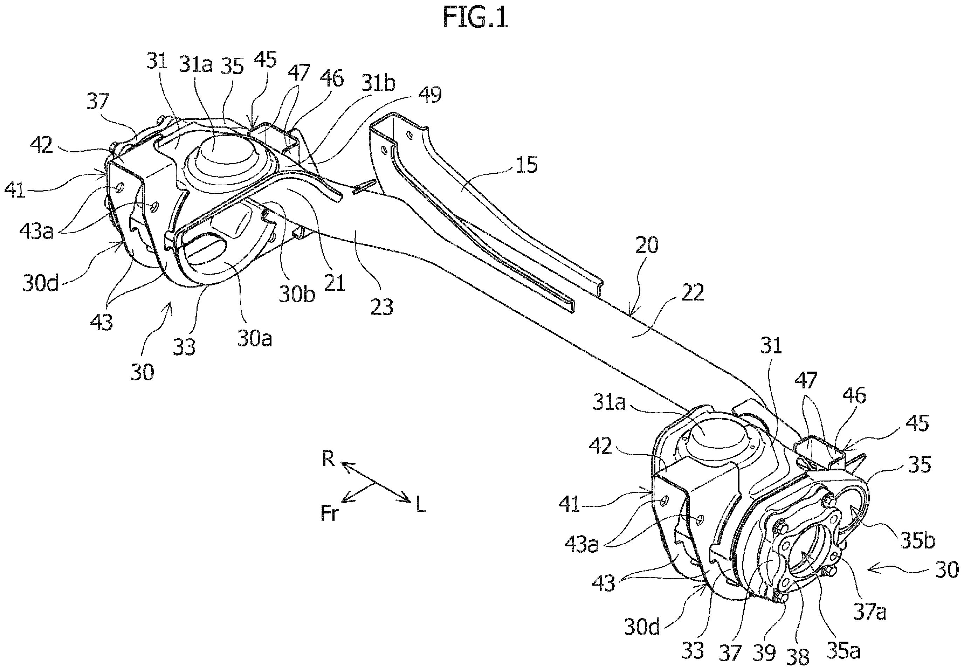

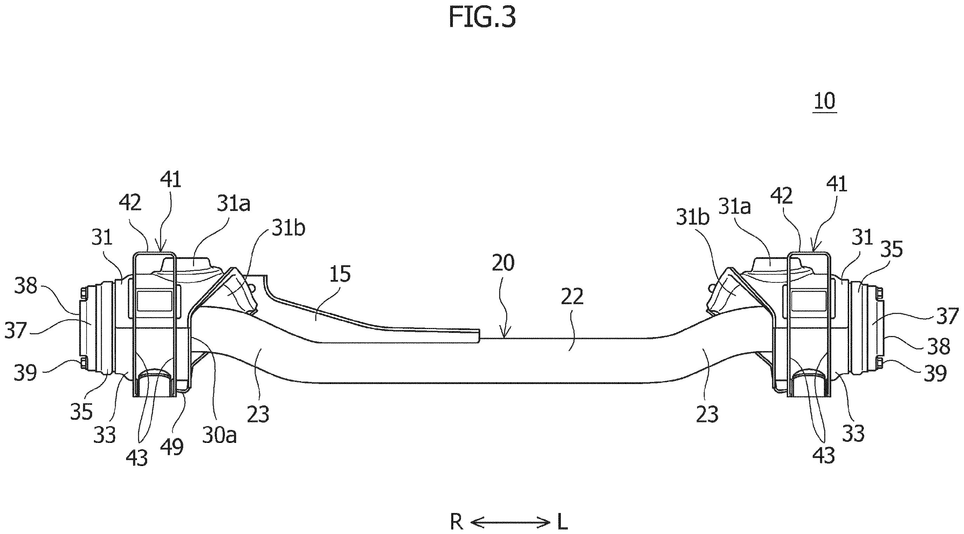

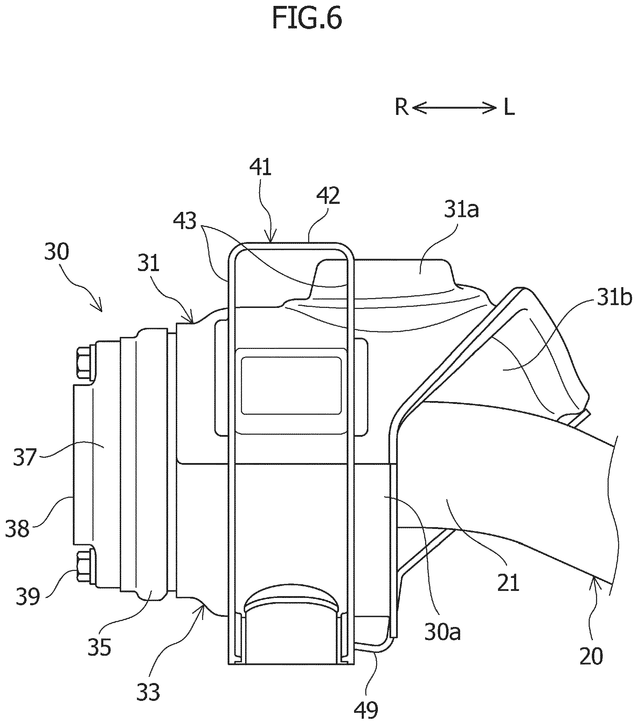

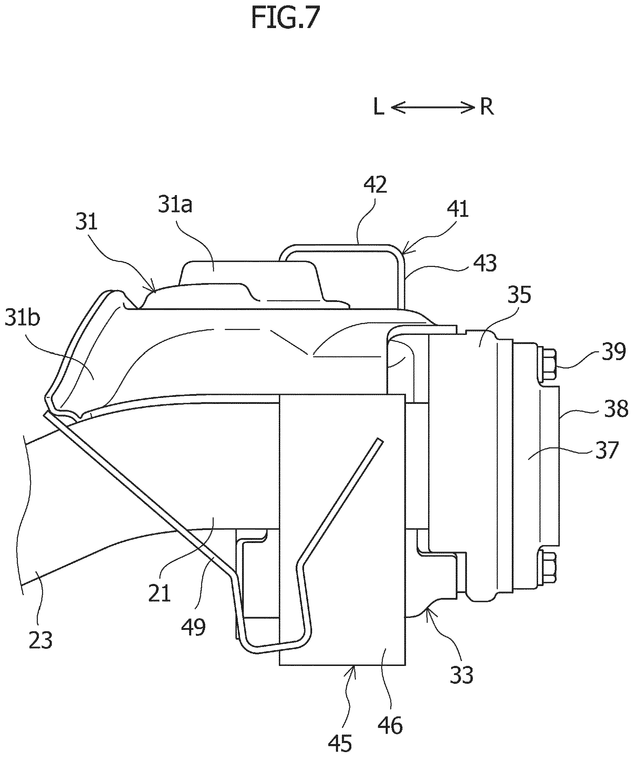

One embodiment of a vehicle comprising a vehicle suspension structure according to the present invention will be described with reference to the drawings (Figure 1 to Figure 9). In the drawings, an arrow Fr direction indicates a frontward direction in the vehicle front-rear direction. A "front part (front end) and a rear part (rear end)" in the description of the embodiments correspond to a front part and a rear part in the vehicle front-rear direction. Furthermore, An arrow R and an arrow L indicate the right and the left when an occupant faces forward.

The vehicle suspension structure of the present embodiment will be described by explaining an example of a structure of a rear suspension 10 of an axle suspension type to which rear wheels (wheels) 11 are fixed. As shown in Figure 1 to Figure 9, the rear suspension 10 of the present embodiment includes: hub carriers 30 through which a drive shaft 12 extending in the vehicle width direction is disposed, the hub carriers being provided with hubs (not shown) to which the rear wheels 11 are fixed; and a connecting member 20 that connects the hub carriers 30 on both sides in the vehicle width direction. The hubs are rotatably attached to the hub carriers 30 via hub bearings (not shown).

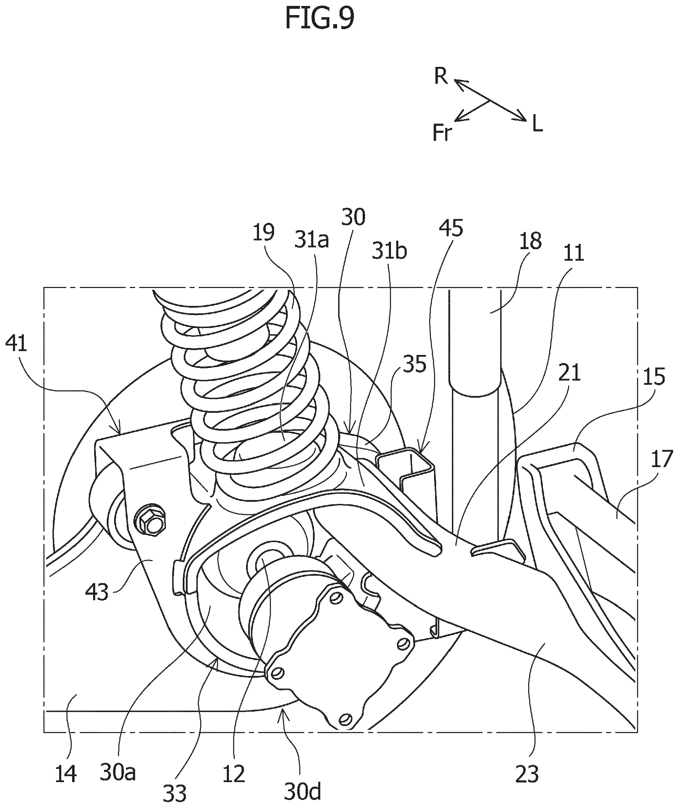

First, the connecting member 20 will be described. As shown in Figure 1 to Figure 3, the connecting member 20 is a member extending in the vehicle width direction as a whole, and outer parts in the vehicle width direction of the connecting member 20 are provided with connecting parts 21 connected to the hub carriers 30. Furthermore, an intermediate part 22 in the vehicle width direction of the connecting member 20 is offset vehicle-rearward from the drive shaft 12 transmitting a driving force to the rear wheels 11, and extends in the vehicle width direction. A rod fixing bracket 15 to which a lateral rod 17 (Figure 9) is fixed and is joined to the intermediate part 22. Furthermore, bent parts 23 that are bent vehicle-rearward and connected to the connecting parts 21 are provided on outer portions in the vehicle width direction of the intermediate part 22.

The bent parts 23 are bent outward in the vehicle width direction toward the vehicle rear side. Furthermore, the bent parts 23 extend to be inclined outward in the vehicle width direction toward the vehicle rear side, and are connected to inner ends in the vehicle width direction of the connecting parts 21. The connecting parts 21 extend in the vehicle width direction, and outer ends in the vehicle width direction of the connecting parts 21 are inserted and fixed to second through-holes 35b of the hub carriers 30, described later.

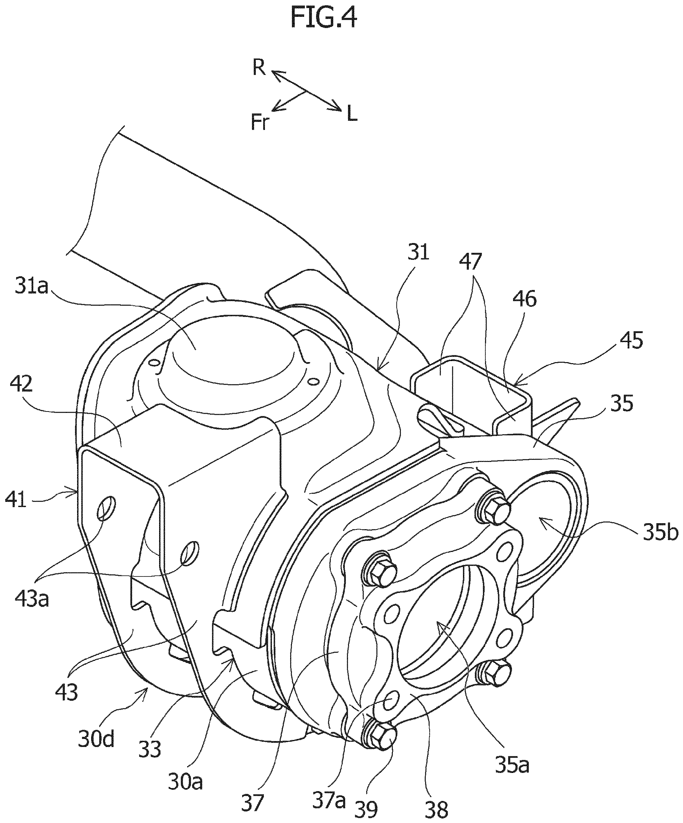

Next, the hub carrier 30 will be described. As shown in Figure 4 to Figure 8, the hub carrier 30 of the present embodiment includes an upper member 31, a lower member 33, an outer member 35, an absorber receiving member 49, a front bracket 41, and a rear bracket 45. The upper member 31, the lower member 33, and the outer member 35 are included in a main body of the hub carrier 30, and the upper member 31 and the lower member 33 are included in a cylindrical part 30a extending in the vehicle width direction. Hereinafter, each member will be described.

The upper member 31 is made of a metallic material, has a predetermined length in the vehicle width direction, is curved so as to be convex upward, and forms a substantially semicircle that is convex upward as viewed in the vehicle width direction. Furthermore, an upper part of the upper member 31 is provided with a spring installation part 31a on which a suspension spring 19 is installed. The spring installation part 31a has a substantially circular flat surface that protrudes vehicle-upward from the top of the upper member 31 and faces vehicle-upward. The suspension spring 19 is installed on this surface (Figure 9).

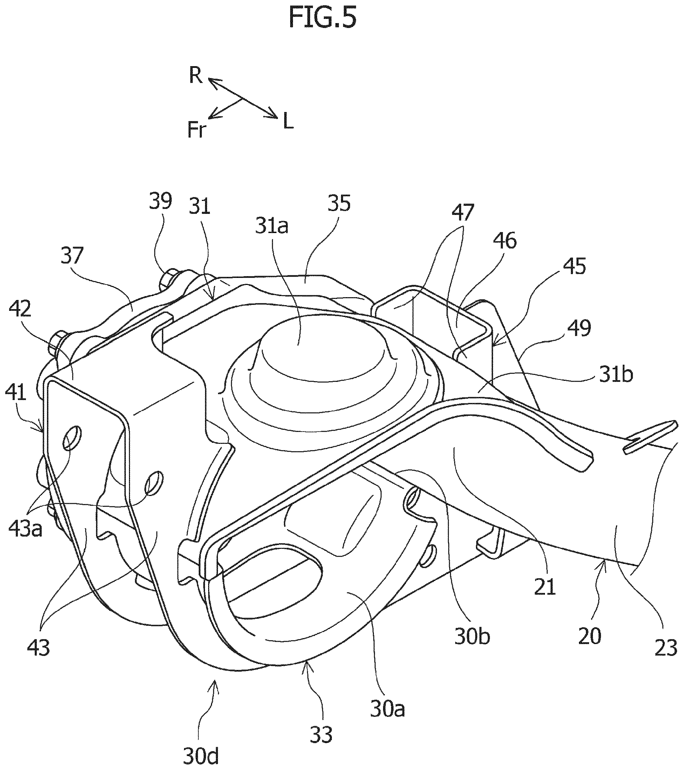

A lower end on the front side of the upper member 31 extends in the vehicle width direction, and the lower member 33 is joined to this part by welding, for example. Furthermore, as shown in Figure 5, an outer end in the vehicle width direction of the upper member 31 is formed in a substantially semicircular shape as described above, and the outer member 35 is joined to this part by welding or the like.

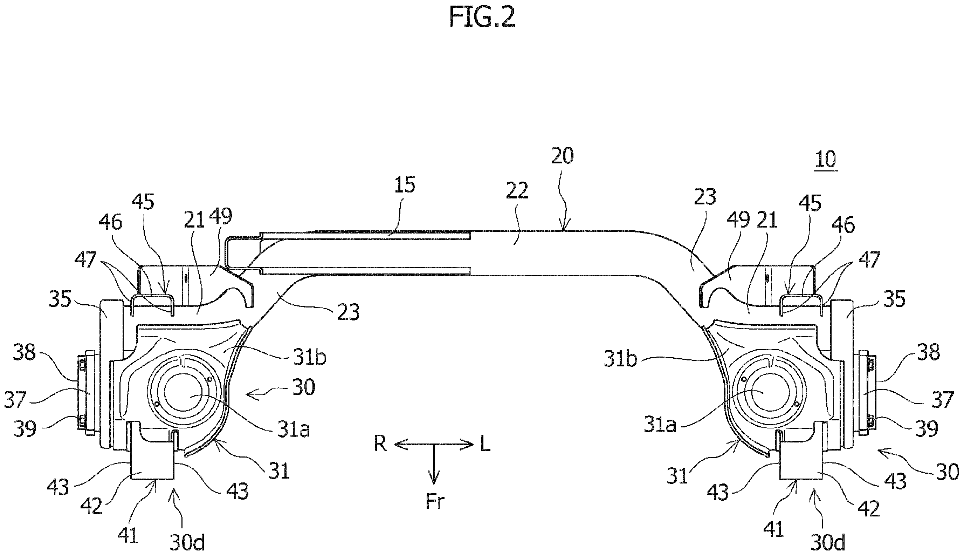

As shown in Figure 2, Figure 5 and Figure 6, an enlarged part 31b protruding toward the inner side in the vehicle width direction is provided in a rear part of the upper member 31. The enlarged part 3 1b will be described later. Furthermore, a lower end on the rear side of the upper member 31 and a lower end on the rear side of the enlarged part 3 1b extend continuously in the vehicle width direction, and these parts are joined to an upper surface of the connecting part 21 of the connecting member 20 by welding or the like.

The lower member 33 is a member arranged on the vehicle lower side of the upper member 31, and is a member formed of a metallic material. As in the upper member 31, the lower member 33 has a predetermined length in the vehicle width direction. Furthermore, the lower member 33 forms a substantially semicircle that opens vehicle-upward as viewed in the vehicle width direction. An upper end on the front side of the lower member 33 extends in the vehicle width direction, and the lower end on the front side of the upper member 31 is joined to this part as described above. In addition, an outer end in the vehicle width direction of the lower member 33 is formed in a substantially semicircular shape as described above, and the outer member 35 is joined to this part by welding or the like, as in the upper member 31. Moreover, an upper end on the rear side of the lower member 33 extends in the vehicle width direction, and a lower surface of the connecting part 21 of the connecting member 20 is joined to this part by welding or the like.

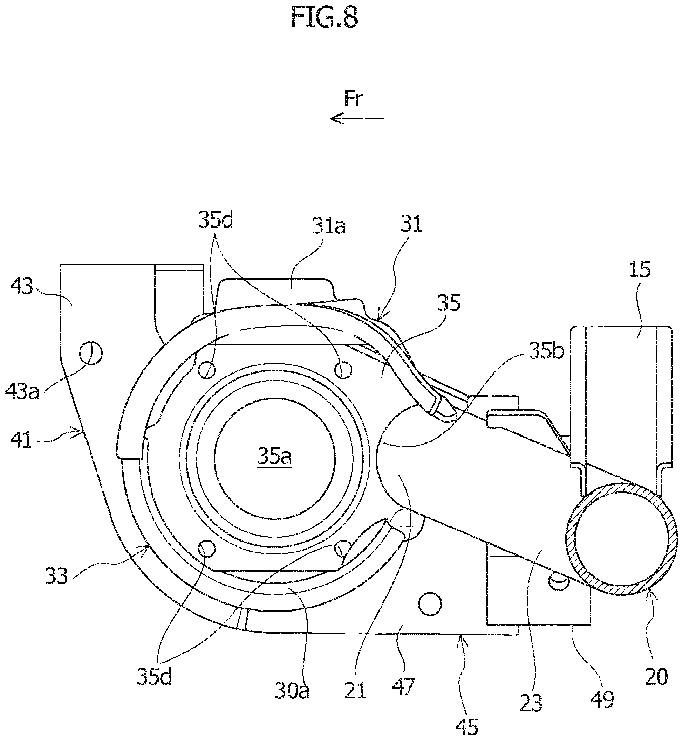

As shown in Figure 5 and Figure 8, the upper member 31 and the lower member 33 are joined together to form a hollow main body having a so-called "Monaca" structure. The cylindrical part 30a extending in the vehicle width direction is formed in this main body. The cylindrical part 30a and the connecting part 21 of the connecting member 20 extend in the vehicle width direction and are parallel to each other. A rear portion of the cylindrical part 30a is provided with a width-direction opening 30b extending in the vehicle width direction. In this example, in a state in which the upper member 31 and the lower member 33 are joined together to form a so-called "C-like" shape that opens vehicle-rearward as shown in Figure 5, as viewed from the inner side in the vehicle width direction.

In the present embodiment, the lower end on the rear side of the upper member 31 and the upper end on the rear side of the lower member 33 are arranged so as to be spaced apart from each other in the vehicle height direction, and this space serves as the width-direction opening 30b. Furthermore, the connecting part 21 of the connecting member 20 is fixed to the rear portion of the cylindrical part 30a in a state of being arranged in the width-direction opening 30b. In this example, the upper surface and the lower surface of the connecting part 21 of the connecting member 20 are joined to an opening edge of the width-direction opening 30b.

The outer member 35 is a member made of a metallic material and fixed on the outer side in the vehicle width direction of the upper member 31 and the lower member 33, and is a plate-shaped member that closes an end in the vehicle width direction of the cylindrical part 30a and extends in the vehicle front-rear direction. The outer member 35 has a first through-hole (through-hole) 35a through which the drive shaft 12 is disposed and a second through-hole 35b into which the connecting member 20 is fixed.

Around the first through-hole 35a, four bolt holes 35d for fixing the fixing member 37 described later are formed (Figure 8). The four bolt holes 35d are arranged around the first through-hole 35a with equal intervals in the circumferential direction. Specifically, on the upper side of the first through-hole 35a, two bolt holes 35d are arranged so as to be spaced apart from each other in the vehicle front-rear direction, and on the lower side of the first through-hole 35a, two bolt holes 35d are arranged so as to be spaced apart from each other in the vehicle front-rear direction (Figure 8).

As shown in Figure 4, Figure 6, and Figure 7, the fixing member 37 is a plate-shaped member having a through-hole formed at the center thereof, and the through-hole communicates with the first through-hole 35a. The fixing member 37 is formed with four through-holes at positions corresponding to the four bolt holes 35d of the outer member 35, and in a state in which the through-holes and the bolt holes 35d communicate with each other, bolts 39 are inserted through the through-holes and screwed into the bolt holes 35d so as to fasten the fixing member 37 to the outer member 35.

As shown in Figure 1 and Figure 4, the fixing member 37 is formed with four hub-fixing bolt holes 37a for fixing the hub. The hub-fixing bolt holes 37a are arranged more radially inward of the first through-hole 35a than the above-mentioned four through-holes of the fixing member 37. The hub is fastened to the outer surface in the vehicle width direction of the fixing member 37 by bolts (not shown).

In the present embodiment, the spring installation part 31a is provided on the upper portion of the cylindrical part 30a including the upper member 31 and the lower member 33. Furthermore, as described above, an upper end on the rear side of the upper member 31 is joined to the connecting part 21 of the connecting member 20. That is, in the present embodiment, the spring installation part 31a is connected to the connecting member 20 via a cylindrical rear wall part of the upper member 31. By forming the hub carrier 30 in a cylindrical shape, it is possible to reduce a stress concentration with respect to a load input from the suspension spring 19, and distribute a stress due to the load to a trailing arm 14 and the connecting member 20; therefore, it is possible to enhance the rigidity and strength of the hub carrier 30.

As described above, since the width-direction opening 30b is joined to the connecting part 21 of the connecting member 20, the load can be efficiently transmitted to the connecting member 20, to thereby reduce the stress concentration on the hub carrier 30; thus, it is possible to reduce the amount of deformation of the hub carrier 30.

The cylindrical part 30a of the present embodiment is provided with an arm fixing part 30d to which the trailing arm 14 extending in the vehicle front-rear direction is fixed (Figure 9). The arm fixing part 30d has a front bracket 41 and a rear bracket 45, and these brackets are configured to partially surround the cylindrical part 30a from the vehicle lower side.

The front bracket 41 has a top surface part 42 and two front vertical walls 43. The front vertical walls 43 protrude vehicle-frontward from a front portion of the cylindrical part 30a, and extends in the vehicle height direction. An upper end of each front vertical wall 43 is located more vehicle-upward than the spring installation part 31a, as shown in Figure 4, Figure 5 and Figure 8. A lower end of the front vertical wall 43 is located at a lower end of the cylindrical part 30a. A rear end of the front vertical wall 43 has an arc shape along the outer peripheral surface of the cylindrical part 30a. A lower portion of the front end of the front vertical wall 43 extends so as to be gradually inclined vehicle-frontward toward the vehicle upper side. The length in the vehicle front-rear direction of the front wall part gradually increases vehicle-upward. Upper parts of the front vertical walls 43 are formed with fixing holes 43a to which the trailing arm 14 is rotatably fixed. The two front vertical walls 43 are arranged so as to be spaced apart from each other in the vehicle width direction while facing each other. Furthermore, the top surface part 42 extends in the vehicle width direction so as to connect the upper ends of the two front vertical walls 43.

The rear bracket 45 has a rear surface part 46 and two rear vertical walls 47. The rear vertical walls 47 protrude vehicle-rearward from the rear portion of the cylindrical part 30a, and extend in the vehicle height direction. As shown in Figure 8, an upper end of each rear vertical wall 47 is located at a slightly vehicle-upper position than the lower end on the rear side of the upper member 31. Lower ends of the rear vertical walls 47 are located corresponding to a lower end of the front bracket 41. Front ends of the rear vertical walls 47 each have an arc shape along the outer peripheral surface of the cylindrical part 30a. Rear ends of the rear vertical walls 47 extend in the vehicle height direction. The length of each rear vertical wall 47 in the vehicle front-rear direction gradually increases vehicle-downward. Lower parts of the rear vertical walls 47 are provided with fixing holes to which the trailing arm 14 is fixed. The two rear vertical walls 47 are arranged so as to be spaced apart from each other in the vehicle width direction while facing each other. Furthermore, the rear surface part 46 faces vehicle-rearward, and extends in the vehicle width direction so as to connect the upper ends of the two rear vertical walls 47. The absorber receiving member 49 to which the shock absorber 18 (Figure 9) is installed is joined to the rear surface part 46. The absorber receiving member 49 is also joined to a rear surface of the bent part 23 of the connecting member 20.

The rigidity of the hub carrier 30 can be further enhanced by the front vertical walls 43 and the rear vertical walls 47 provided so as to surround the outer circumference of the cylinder in the circumferential direction. Furthermore, in the present embodiment, the two rear vertical walls 47 are joined to a rear surface of the connecting part 21 of the connecting member 20 by welding or the like. Hence, contact points of the hub carrier 30, the trailing arm 14, and the connecting member 20 can be brought closer to one another, and thus a load acting on the hub carrier 30 can be distributed to the trailing arm 14 and the connecting member 20.

In the present embodiment, as described above, the upper member 31 is provided with the enlarged part 31b. The enlarged part 31b protrudes toward the inner side in the vehicle width direction at the rear portion of the cylindrical part 30a, and an inner end in the vehicle width direction of the enlarged part 31b extends along the longitudinal direction of the bent part 23. That is, the inner end in the vehicle width direction of the enlarged part 31b is gradually inclined inward in the vehicle width direction toward the vehicle rear side. The inner end in the vehicle width direction of the enlarged part 3 1b and the connecting part 21 are formed so as to be continuous along the inclining direction. Furthermore, as described above, a lower portion of the enlarged part 31b is joined to the connecting member 20. Furthermore, in this example, the spring installation part 31a is partially disposed in the enlarged part 31b.

By providing the enlarged part 3 1b, an input from the suspension spring 19 can be effectively distributed not only to the hub carrier 30 but also to the connecting member 20; therefore, a load concentration on the hub carrier 30 can be reduced, thus realizing a lighter structure.

In the present embodiment, a hub fixing part 38 is provided on an outer portion in the vehicle width direction of the cylindrical part 30a. In this example, the hub fixing part 38 is provided on the fixing member 37 fixed to the outer member 35, as described above. Furthermore, in the hub fixing part 38, the hub is fixed in an inner region of the cylinder located on the outer side in the vehicle width direction of the cylindrical part 30a. Accordingly, the rigidity of the cylindrical part 30a can be further enhanced by surrounding and fixing the opening (the first through-hole 35a) on the outer side in the vehicle width direction of the cylindrical part 30a by the integrally formed members having a high rigidity, to thereby suppress deformation with respect to the load input.

The description of the present embodiment is an example for explaining the present invention, and does not limit the invention as claimed in the claims. Furthermore, the configuration of each part of the present invention is not limited to the above embodiments, and various modifications can be made within the technical scope as claimed in the claims.

In the present embodiment, the cylindrical part 30a of the hub carrier 30 includes the upper member 31 and the lower member 33 that are arranged in the height direction, but it is not limited to this. The cylindrical part 30a may include a single member.

### [Reference Signs List]

10 rear suspension
11 rear wheel
12 drive shaft
14 trailing arm
15 rod fixing bracket
17 lateral rod
18 shock absorber
19 suspension spring
20 connecting member
21 connecting part
22 intermediate part
23 bent part
30 hub carrier
30a cylindrical part
30b width-direction opening
30d arm fixing part
31 upper member
31a spring installation part
31b enlarged part
33 lower member
35 outer member
35a first through-hole (through-hole)
35b second through-hole
35d bolt hole
37 fixing member
37a hub-fixing bolt hole
38 hub fixing part
41 front bracket
42 top surface part
43 front vertical wall
43a fixing hole
45 rear bracket
46 rear surface part
47 rear vertical wall
49 absorber receiving member

## Claims

1. A vehicle comprising a vehicle suspension structure of an axle suspension type including: hub carriers (30) through which a drive shaft (12) extending in a vehicle width direction is disposed, hubs for wheels being fixed to the hub carriers (30); and a connecting member (20) that connects the hub carriers (30) on both sides in the vehicle width direction,
wherein outer parts in the vehicle width direction of the connecting member (20) are provided with connecting parts (21) that are connected to the hub carriers (30), an intermediate part (22) in the vehicle width direction of the connecting member (20) is offset vehicle-rearward from the drive shaft (12), and extends in the vehicle width direction, outer portions in the vehicle width direction of the intermediate part (22) are provided with bent parts (23) that are bent vehicle-frontward and are connected to the connecting parts (21),
the hub carriers (30) each have a cylindrical part (30a) extending in the vehicle width direction, and a through-hole (35a) through which the drive shaft (12) is inserted is provided at an outer end in the vehicle width direction of the cylindrical part (30a), and
the vehicle being **characterized in that** an upper portion of the cylindrical part (30a) is provided with a spring installation part (31a) on which a suspension spring is installed.

2. The vehicle according to claim 1 wherein
the cylindrical parts (30a) and the connecting parts (21) of the connecting member (20) are arranged in parallel to each other,
a rear portion of each cylindrical part (30a) is provided with a width-direction opening (30b) extending in the vehicle width direction, and each connecting part (21) is fixed to a rear part of the cylindrical part (30a) in a state in which the connecting part is disposed inside the width-direction opening (30b).

3. The vehicle according to claim 1 or claim 2, wherein
the vehicle includes a trailing arm (14) attached to the cylindrical part (30a) and extending in a vehicle front-rear direction,
each cylindrical part (30a) is provided with an arm fixing part (30d) to which the trailing arm (14) is fixed,
the arm fixing part (30d) is configured to partially surround the cylindrical part (30a) from a vehicle lower side,
a front portion of the arm fixing part (30d) is provided with
two front vertical walls (43) that protrude vehicle-frontward from a front portion of the cylindrical part (30a) and extend in the vehicle height direction, the front vertical walls (43) being disposed so as to be spaced apart from each other in the vehicle width direction while facing each other, and
a rear portion of the arm fixing part (30d) is provided with two rear vertical walls (47) that protrude vehicle-rearward from a rear portion of the cylindrical part (30a) and extend in the vehicle height direction, the rear vertical walls (47) being disposed so as to be spaced apart from each other in the vehicle width direction while facing each other.

4. The vehicle according to claim 3, wherein the two rear vertical walls (47) are joined to the connecting part (21) of the connecting member (20).

5. The vehicle according to any one of claim 1 to claim 4, wherein
a rear portion of each cylindrical part (30a) is provided with an enlarged part (31b) protruding toward an inner side in the vehicle width direction, an inner end in the vehicle width direction of the enlarged part (31b) extends along a longitudinal direction of the bent part (23), and a lower portion of the enlarged part (31b) is joined to the connecting member (20), and
the spring installation part (31a) is partially disposed in the enlarged part (31b).

6. The vehicle according to any one of claim 1 to claim 5, wherein a hub fixing part (38) to which the hub is fixed is provided on an outer portion in the vehicle width direction of each cylindrical part (30a), and the hub is fixed in an outer surface in the vehicle width direction of the cylindrical part (30a).

## Patentansprüche

1. Fahrzeug, umfassend eine Fahrzeugaufhängungsstruktur vom Achsaufhängungstyp, umfassend: Nabenträger (30), durch welche eine Antriebswelle (12) angeordnet ist, welche sich in einer Fahrzeugbreitenrichtung erstreckt, wobei Naben für Räder an den Nabenträgern (30) fixiert sind; und ein Verbindungselement (20), welches die Nabenträger (30) an beiden Seiten in der Fahrzeugbreitenrichtung verbindet,
wobei äußere Teile in der Fahrzeugbreitenrichtung des Verbindungselements (20) mit Verbindungsteilen (21) bereitgestellt sind, welche mit den Nabenträgern (30) verbunden sind, wobei ein Zwischenteil (22) in der Fahrzeugbreitenrichtung des Verbindungselements (20) von der Antriebswelle (12) am Fahrzeug nach hinten versetzt ist und sich in der Fahrzeugbreitenrichtung erstreckt, wobei äußere Abschnitte in der Fahrzeugbreitenrichtung des Zwischenteils (22) mit gebogenen Teilen (23) bereitgestellt sind, welche am Fahrzeug nach vorne gebogen sind und mit den Verbindungsteilen (21) verbunden sind,
wobei die Nabenträger (30) jeweils einen zylindrischen Teil (30a) aufweisen, welcher sich in der Fahrzeugbreitenrichtung erstreckt, und ein Durchgangsloch (35a), durch welches die Antriebswelle (12) eingefügt ist, an einem äußeren Ende in der Fahrzeugbreitenrichtung des zylindrischen Teils (30a) bereitgestellt ist, und
das Fahrzeug **dadurch gekennzeichnet ist, dass**
ein oberer Abschnitt des zylindrischen Teils (30a) mit einem Federmontageteil (31a) bereitgestellt ist, an welchem eine Aufhängungsfeder montiert ist.

2. Fahrzeug nach Anspruch 1, wobei
die zylindrischen Teile (30a) und die Verbindungsteile (21) des Verbindungselements (20) parallel zueinander angeordnet sind,
ein hinterer Abschnitt jedes zylindrischen Teils (30a) mit einer Breitenrichtungsöffnung (30b) bereitgestellt ist, welche sich in der Fahrzeugbreitenrichtung erstreckt, und jeder Verbindungsteil (21) mit einem hinteren Teil des zylindrischen Teils (30a) in einem Zustand fixiert ist, in welchem der Verbindungsteil innerhalb der Breitenrichtungsöffnung (30b) angeordnet ist.

3. Fahrzeug nach Anspruch 1 oder Anspruch 2, wobei
das Fahrzeug einen Längslenker (14) umfasst, welcher an dem zylindrischen Teil (30a) befestigt ist und sich in einer Vorne-Hinten-Fahrzeugrichtung erstreckt,
jeder zylindrische Teil (30a) mit einem Arm-Fixierteil (30d) bereitgestellt ist, an welchem der Längslenker (14) fixiert ist,
der Arm-Fixierteil (30d) dazu eingerichtet ist, den zylindrischen Teil (30a) von einer unteren Fahrzeugseite teilweise zu umgeben,
ein vorderer Abschnitt des Arm-Fixierteils (30d) mit zwei vorderen vertikalen Wänden (43) bereitgestellt ist, welche von einem vorderen Abschnitt des zylindrischen Teils (30a) am Fahrzeug nach vorne hervorstehen und sich in der Fahrzeughöhenrichtung erstrecken, wobei die vorderen vertikalen Wände (43) derart angeordnet sind, dass sie in der Fahrzeugbreitenrichtung voneinander beabstandet sind, während sie einander zugewandt sind, und
ein hinterer Abschnitt des Arm-Fixierteils (30d) mit zwei hinteren vertikalen Wänden (47) bereitgestellt ist, welche von einem hinteren Abschnitt des zylindrischen Teils (30a) am Fahrzeug nach hinten hervorstehen und sich in der Fahrzeughöhenrichtung erstrecken, wobei die hinteren vertikalen Wände (47) derart angeordnet sind, dass sie in der Fahrzeugbreitenrichtung voneinander beabstandet sind, während sie einander zugewandt sind

4. Fahrzeug nach Anspruch 3, wobei die zwei hinteren vertikalen Wände (47) mit dem Verbindungsteil (21) des Verbindungselements (20) verbunden sind.

5. Fahrzeug nach einem aus Anspruch 1 bis Anspruch 4, wobei
ein hinterer Abschnitt jedes zylindrischen Teils (30a) mit einem vergrößerten Teil (31b) bereitgestellt ist, welcher in der Fahrzeugbreitenrichtung in Richtung einer inneren Seite hervorsteht, wobei sich ein inneres Ende in der Fahrzeugbreitenrichtung des vergrößerten Teils (31b) entlang einer longitudinalen Richtung des gebogenen Teils (23) erstreckt und ein unterer Abschnitt des vergrößerten Teils (31b) mit dem Verbindungselement (20) verbunden ist, und
der Federmontageteil (31a) teilweise in dem vergrößerten Teil (31b) angeordnet ist.

6. Fahrzeug nach einem aus Anspruch 1 bis Anspruch 5, wobei ein Nabenfixierteil (38), an welchem die Nabe fixiert ist, an einem äußeren Abschnitt in der Fahrzeugbreitenrichtung jedes zylindrischen Teils (30a) bereitgestellt ist und die Nabe in einer äußeren Fläche in der Fahrzeugbreitenrichtung des zylindrischen Teils (30a) fixiert ist.

## Revendications

1. Véhicule comprenant une structure de suspension de véhicule d'un type de suspension d'essieu comportant : des porte-moyeu (30) à travers lesquels un arbre d'entraînement (12) s'étendant dans une direction de largeur de véhicule est disposé, des moyeux pour roues étant fixés sur les porte-moyeu (30) ; et un élément de raccordement (20) qui raccorde les porte-moyeu (30) des deux côtés dans la direction de largeur de véhicule, dans lequel des parties externes dans la direction de largeur de véhicule de l'élément de raccordement (20) sont dotées de parties de raccordement (21) qui sont raccordées aux porte-moyeu (30), une partie intermédiaire (22) dans la direction de largeur de véhicule de l'élément de raccordement (20) est décalée vers l'arrière du véhicule depuis l'arbre d'entraînement (12), et s'étend dans la direction de largeur de véhicule, des parties externes dans la direction de largeur de véhicule de la partie intermédiaire (22) sont dotées de parties courbées (23) qui sont courbées vers l'avant du véhicule et sont raccordées aux parties de raccordement (21),
les porte-moyeu (30) présentent chacun une partie cylindrique (30a) s'étendant dans la direction de largeur de véhicule, et un trou traversant (35a) à travers lequel l'arbre d'entraînement (12) est inséré est disposé au niveau d'une extrémité externe dans la direction de largeur de véhicule de la partie cylindrique (30a), et
le véhicule étant **caractérisé en ce qu'**une partie supérieure de la partie cylindrique (30a) est dotée d'une partie d'installation de ressort (31a) sur laquelle un ressort de suspension est installé.

2. Véhicule selon la revendication 1 dans lequel
les parties cylindriques (30a) et les parties de raccordement (21) de l'élément de raccordement (20) sont agencées en parallèle les unes aux autres,
une partie arrière de chaque partie cylindrique (30a) est dotée d'une ouverture dans la direction de largeur (30b) s'étendant dans la direction de largeur de véhicule, et chaque partie de raccordement (21) est fixée à une partie arrière de la partie cylindrique (30a) dans un état dans lequel la partie de raccordement est disposée à l'intérieur de l'ouverture dans la direction de largeur (30b).

3. Véhicule selon la revendication 1 ou la revendication 2, dans lequel
le véhicule comporte un bras tiré (14) fixé à la partie cylindrique (30a) et s'étendant dans une direction avant-arrière de véhicule,
chaque partie cylindrique (30a) est dotée d'une partie de fixation de bras (30a) à laquelle le bras tiré (14) est fixé,
la partie de fixation de bras (30d) est configurée pour entourer partiellement la partie cylindrique (30a) depuis un côté inférieur de véhicule,
une partie avant de la partie de fixation de bras (30d) est dotée de deux parois verticales avant (43) qui font saillie vers l'avant du véhicule depuis une partie avant de la partie cylindrique (30a) et s'étendent dans la direction de largeur de véhicule, les parois verticales avant (43) étant disposées de manière à être espacées l'une de l'autre dans la direction de largeur de véhicule tout en se faisant face, et
une partie arrière de la partie de fixation de bras (30d) est dotée de deux parois verticales arrière (47) qui font saillie vers l'arrière du véhicule depuis une partie arrière de la partie cylindrique (30a) et s'étendent dans la direction de hauteur de véhicule, les parois verticales arrière (47) étant disposées de manière à être espacées l'une de l'autre dans la direction de largeur de véhicule tout en se faisant face.

4. Véhicule selon la revendication 3, dans lequel les deux parois verticales arrière (47) sont j ointes à la partie de raccordement (21) de l'élément de raccordement (20).

5. Véhicule selon l'une quelconque de la revendication 1 à la revendication 4, dans lequel
une partie arrière de chaque partie cylindrique (30a) est dotée d'une partie agrandie (31b) faisant saillie en direction d'un côté interne dans la direction de largeur de véhicule, une extrémité interne dans la direction de largeur de véhicule de la partie agrandie (31b) s'étend le long d'une direction longitudinale de la partie courbée (23), et une partie inférieure de la partie agrandie (31b) est jointe à l'élément de raccordement (20), et
la partie d'installation de ressort (31a) est partiellement disposée dans la partie agrandie (31b).

6. Véhicule selon l'une quelconque de la revendication 1 à la revendication 5, dans lequel une partie de fixation de moyeu (38) à laquelle le moyeu est fixé est disposée sur une partie externe dans la direction de largeur de véhicule de chaque partie cylindrique (30a), et le moyeu est fixé dans une surface externe dans la direction de largeur de véhicule de la partie cylindrique (30a).
